# EUROPÄISCHE PATENTANMELDUNG

(11) **EP 2 907 917 A1**
(43) Veröffentlichungstag der Anmeldung: **19.08.2015**
(21) Anmeldenummer: 15450002.9
(22) Anmeldetag: 15.01.2015
(51) Int. Cl.: D21F 1/36, D21F 5/04, D21F 7/00

(54) **Anlage zur Förderung von Materialien, Produkten u.dgl. mit mindestens einem in sich geschlossenen Förderband**

(30) Priorität: 17.02.2014 AT 1112014
(71) Anmelder: JUD Aktiengesellschaft Papiermaschinen, 9491 Ruggell (LI)
(72) Erfinder: Bartelmuss, Klaus, 8833 Teufenbach (AT)
(74) Vertreter: Beer & Partner Patentanwälte KG

(57) **Zusammenfassung**

Anlage zur Förderung von Materialien, Produkten u.dgl. mit mindestens einem über Walzen (22, 3, 31, 32, 33, 34; 21a, 3a, 22a, 31a, 32a, 33a) geführten, in sich geschlossenen Förderband (1; 1a), mit einem vorlaufenden Bandtrum zur Förderung der Materialien bzw. Produkte und einem rücklaufenden Bandtrum, insbesondere Anlage zur Erzeugung von Papier mit mindestens einem Siebband bzw. einem Filzband zur Herstellung einer Papierbahn (4), weiters mit einer Einrichtung (5; 5a) zur Ermittlung und Regelung der Spannung des Förderbandes (1; 1a), welche ein bei einer Walze (33; 33a) angeordnetes Druckmessgerät (51; 51a) aufweist, und mit einer Einrichtung (6; 6a) zur Ermittlung von Abweichungen der Bewegungsrichtung des Förderbandes (1; 1a) von der richtigen Bewegungsrichtung sowie zur Korrektur der Bewegungsrichtung des Förderbandes (1; 1a), welche einen einem seitlichen Rand des Förderbandes (1; 1a) zugeordneten Sensor (61; 61a) aufweist, dessen Ausgang zur Verstellung eines der Lager einer Walze (33, 33a) zur Korrektur der Bewegungsrichtung des mindestens einen Förderbandes (1; 1a) dient. Dabei befindet sich das Druckmessgerät (5; 5a) zur Ermittlung der Spannung des Förderbandes (1; 1a) bei demjenigen Lager einer der Walzen (33; 33a), welches zur Korrektur der Bewegungsrichtung des mindestens einen Förderbandes (1; 1a) verstellbar ist.

## Beschreibung

Die gegenständliche Erfindung betrifft eine Anlage zur Förderung von Materialien, Produkten u.dgl. mit mindestens einem über Walzen geführten, in sich geschlossenen Förderband, mit einem vorlaufenden Bandtrum zur Förderung der Materialien bzw. Produkte und mit einem rücklaufenden Bandtrum, weiters mit einer Einrichtung zur Ermittlung und Regelung der Spannung des Förderbandes und mit einer Einrichtung zur Ermittlung von Abweichungen der Bewegungsrichtung des Förderbandes von der richtigen Bewegungsrichtung sowie zur Korrektur der Bewegungsrichtung des Förderbandes, wobei die Einrichtung zur Ermittlung und Regelung der Spannung des Förderbandes ein bei einem Lager einer Walze befindliches Druckmessgerät aufweist und weiters die Einrichtung zur Ermittlung von Abweichungen der Bewegungsrichtung des mindestens einen Förderbandes von der richtigen Bewegungsrichtung und zu deren Korrektur einen einem seitlichen Rand des Förderbandes zugeordneten Sensor aufweist, dessen Ausgang zur Verstellung eines der Lager einer Walze zur Korrektur der Bewegungsrichtung des mindestens einen Förderbandes dient.

Die gegenständliche Erfindung betrifft insbesondere eine Anlage zur Erzeugung von Papier mit mindestens einem Siebband bzw. einem Filzband, welches über Walzen, insbesondere über Trocknungswalzen, geführt ist, zur Herstellung eines Papierbandes, wobei das Siebband bzw. das Filzband ein Förderband darstellen.

Bei derartigen Anlagen zur Förderung von Materialien, Produkten od.dgl. bestehen für einen ordnungsgemäßen Betrieb die Erfordernisse, dass das mindestens eine Förderband eine vorgegebene Spannung aufweist und dass das Förderband exakt in der Förderrichtung bewegt wird.

Bei Anlagen zur Papiererzeugung wird durch die Spannung des Siebbandes bzw. des Filzbandes die Qualität des erzeugten Papiers beeinflusst. Sofern weiters das Siebband oder das Filzband nicht in der richtigen Bewegungsrichtung verläuft, bewegt sich dieses aus der Bewegungsbahn hinaus, wodurch der Erzeugungsvorgang gestört wird.

Um die Spannung des Förderbandes regeln zu können, ist es bekannt, eine der Walzen, über welche das Förderband geführt wird, mit einem Druckmessgerät auszubilden, um hierdurch die Spannung des Förderbandes zu ermitteln. Zudem ist das Förderband über eine Walze geführt, welche in der Bewegungsrichtung des Förderbandes verstellbar ist, wodurch die Spannung des Förderbandes auf den erforderlichen Wert geregelt werden kann.

Um die Bewegungsrichtung des Förderbandes regeln zu können, ist es bekannt, einem der Seitenränder des Förderbandes einen Sensor zuzuordnen, durch welchen Abweichungen von der erforderlichen Bewegungsrichtung des Förderbandes erfasst werden. Wie dies vorstehend ausgeführt ist, ist eines der beiden Lager einer der Walzen mit einem Druckmessgerät ausgebildet. Weiters ist das andere Lager dieser Walze in der Bewegungsrichtung des Förderbandes verstellbar. Durch diese Verstellung des Lagers einer der Walzen gegenüber dem Förderband, welche vom Sensor her gesteuert wird, kann die Bewegungsrichtung des Förderbandes dahingehend geregelt werden, dass es sich exakt in der erforderlichen Richtung bewegt.

Bei bekannten Anlagen zur Förderung von Materialien, Produkten od.dgl. ist somit einerseits eines der Lager einer der Walzen mit einem Druckmessgerät ausgebildet, welches zur Ermittlung der Spannung des Förderbandes dient, und ist andererseits das andere Lager dieser Walze gegenüber dem Förderband verstellbar, um hierdurch die Bewegungsrichtung des Förderbandes regeln zu können.

Der gegenständlichen Erfindung liegt die Aufgabe zugrunde, die konstruktive Ausbildung einer Anlage zur Förderung von Materialien, Produkten od.dgl. zu vereinfachen. Dies wird erfindungsgemäß dadurch erzielt, dass sich das Druckmessgerät zur Ermittlung der Spannung des Förderbandes bei demjenigen Lager einer der Walzen befindet, welches zur Korrektur der Bewegungsrichtung des mindestens einen Förderbandes verstellbar ist.

Da somit sowohl die Einrichtung zur Ermittlung der Spannung des Förderbandes als auch die Einrichtung zur Regelung der Bewegungsrichtung des Förderbandes dem gleichen Lager einer Walze der Anlage zugeordnet sind, wird eine Vereinfachung in der Konstruktion, bei der Montage, bei der Wartung und beim Austausch von Bestandteilen bewirkt. Dieser vorteilhafte Effekt tritt insbesondere dann ein, wenn eine bestehende Förderanlage nachgerüstet wird, da dann die hierfür erforderlichen Montagearbeiten nur auf einer Seite einer der Walzen vorgenommen zu werden brauchen.

Vorzugsweise befindet sich das Lager derjenigen Walze, bei welcher das Druckmessgerät angeordnet ist, auf einem Wagen, welcher in Bewegungsrichtung des Förderbandes verstellbar ist, wobei das Druckmessgerät zwischen dem Lager und dem Wagen angeordnet ist.

Gemäß einer bevorzugten Ausführungsform weist die Einrichtung zur Ermittlung und Regelung der Spannung des mindestens einen Förderbandes ein Druckmessgerät auf, dessen Ausgang an eine Steuereinheit geführt ist, durch welche die Spannung des Förderbandes ermittelt wird, wobei der Ausgang der Steuereinheit zur Verstellung einer weiteren Walze in Bewegungsrichtung des Förderbandes dient. Weiters kann die Einrichtung zur Ermittlung und Regelung der Spannung des Förderbandes eine Walze aufweisen, welche vom Förderband um zumindest 10° umschlungen ist und welche in Bewegungsrichtung des Förderbandes verstellbar ist. Der Wagen, auf welchem sich eines der Lager der Walze befindet, kann mittels einer hydraulisch bzw. pneumatisch betätigten Stelleinrichtung, welche von der Einrichtung zur Ermittlung von Abweichungen der Bewegungsrichtung von der richtigen Bewegungsrichtung des Förderbandes gesteuert wird, verstellbar sein.

Gemäß einer weiteren bevorzugten Ausführungsform ist dasjenige Lager für eine Walze, welches zur Korrektur der Bewegungsrichtung des mindestens einen Förderbandes insbesondere in dessen Bewegungsrichtung verstellbar ist, mit dem Sensor zur Erfassung von Abweichungen der Bewegungsrichtung des mindestens einen Förderbandes von der richtigen Bewegungsrichtung des Förderbandes mechanisch rückgekoppelt. Vorzugsweise befindet sich weiters diejenige Walze, welcher die Einrichtungen zur Ermittlung und der Regelung der Spannung des Förderbandes und zur Ermittlung und Korrektur der Bewegungsrichtung des Förderbandes zugeordnet sind, im Bereich des rücklaufenden Trumes des Förderbandes.

Insbesondere ist eine erfindungsgemäße Anlage mit zwei in sich geschlossenen Förderbändern ausgebildet, zwischen welchen sich das zu befördernde Material befindet, wobei jedes dieser beiden Förderbänder über eine Walze geführt ist, bei welcher einem der Lager eine Einrichtung zur Ermittlung und zur Regelung der Spannung der Förderbänder zugeordnet ist und weiters dieses Lager in der Bewegungsrichtung des zugeordneten Förderbandes verstellbar ist.

Der Gegenstand der Erfindung ist nachstehend anhand eines in der Zeichnung dargestellten Ausführungsbeispiels näher erläutert. Es zeigen:
- FIG.1: einen Abschnitt einer Anlage zur Erzeugung einer Papierbahn mit zwei in sich geschlossenen und im Umlauf bewegbaren Filzbändern, zwischen welchen sich die Papierbahn befindet, in schematischer Darstellung, und
- FIG.2: eine Walze, über welche ein Filzband geführt ist, wobei einem Lager dieser Walze eine Einrichtung zur Ermittlung der Spannung des Filzbandes und eine Einrichtung zur Regelung der Bewegungsrichtung des Filzbandes zugeordnet sind, in axonometrischer Darstellung.

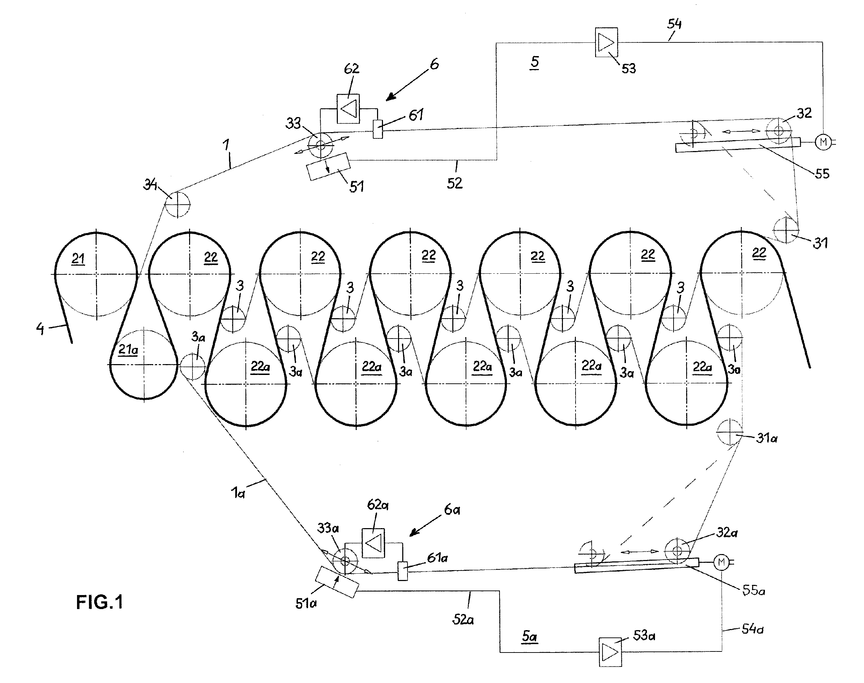

Der in FIG.1 dargestellte Abschnitt einer Anlage zur Papiererzeugung weist zwei Gruppen von Walzen 21, 22 bzw. 21a, 22a sowie diesen zugeordnete Umlenkwalzen 3 bzw. 3a und zwei in sich geschlossene und im Umlauf bewegbare Filzbänder 1 bzw. 1a auf, welche über die Walzen 21a, 22 bzw. 22a und die Umlenkwalzen 3 bzw. 3a geführt sind, wobei sich zwischen den Filzbändern 1 bzw. 1a und den Walzen 22 bzw. 22a eine Papierbahn 4 befindet, welche durch diesen Abschnitt hindurchbewegt wird.

Die Walzen 22 bzw. 22a, welche beheizbar sind, stellen Trocknungswalzen für die Papierbahn 4 dar, wobei zumindest ein Teil der Walzen 22 bzw. 22a angetrieben ist.

In dem in der Zeichnung dargestellten linken Bereich ist die Papierbahn 4 über die Walze 21 der ersten Gruppe von Walzen geführt. In der Folge kommt an die Papierbahn 4 das Filzband 1 zur Anlage, welches zugleich mit der Papierbahn 4 über die Walze 21a der zweiten Gruppe von Walzen geführt ist, wobei sich das Filzband 1 zwischen der Papierbahn 4 und der Walze 21a befindet. Hierauf gelangen das Filzband 1 und die Papierbahn 4 zur ersten Walze 22 der ersten Gruppe der Walzen, wobei sich die Papierbahn 4 zwischen dem Filzband 1 und dieser Walze 22 befindet. In weiterer Folge wird das Filzband 1 über die erste Umlenkwalze 3 der den ersten Walzen zugeordneten Umlenkwalzen zur folgenden Walze 22 geführt, wogegen sich die Papierbahn 4 über die erste Walze 22a der zweiten Gruppe der Walzen, welche dem zweiten Filzband 1a zugeordnet sind, bewegt. Das zweite Filzband 1a wird über die erste Umlenkwalze 3a der der zweiten Gruppe von Walzen zugeordneten Umlenkwalzen 3a bewegt und kommt in der Folge an die über die erste Walze 22a geführte Papierbahn 4 zur Anlage, wobei sich die Papierbahn 4 zwischen dem zweiten Filzband 1a und der ersten Walze 22a befindet. Hierauf wird das zweite Filzband 1a über eine weitere Umlenkwalze 3a und eine weitere Walze 22a geführt.

In weiterer Folge wird das erste Filzband 1 über die weiteren Umlenkwalzen 3 und die weiteren Walzen 22 geführt und wird das zweite Filzband 1a über die weiteren Umlenkwalzen 3a und über die weiteren Walzen 22a geführt.

Die Papierbahn 4 wird abwechselnd über eine Walze 22 der ersten Gruppe der Walzen und über eine Walze 22a der zweiten Gruppe der Walzen 22a geführt, wobei sich die Papierbahn 4 in den Bereichen der Walzen 22 bzw. 22a immer zwischen einem der beiden Filzbänder 1 bzw. 1a und den Walzen 22 bzw. 22a befindet.

Am Ende dieses Abschnitts dieser Anlage werden die Filzbänder 1 bzw. 1a über weitere Walzen 31, 32, 33, 34 bzw. 31a, 32a, 33a, durch welche die Filzbänder 1 bzw. 1a umgelenkt werden, zum Anfang dieses Abschnitts zurückgeführt.

Bei Anlagen zur Erzeugung einer Papierbahn besteht einerseits das Erfordernis, dass das mindestens eine Filzband eine vorgegebene Spannung aufweist, da die Qualität des erzeugten Papiers von der Spannung des Filzbandes bzw. der Filzbänder abhängig ist. Weiters muss gewährleistet sein, dass sich das Filzband bzw. die Filzbänder exakt in der richtigen Bewegungsrichtung bewegen, da durch ein Abweichen des Filzbandes bzw. der Filzbänder von der richtigen Bewegungsbahn beim Betrieb dieser Anlage Funktionsstörungen verursacht werden.

Um eine Regelung der Spannung des mindestens einen Filzbandes zu bewirken, ist im Bereich des rücklaufenden Trumes des ersten Filzbandes 1 eine Einrichtung 5 zur Ermittlung und Regelung der Spannung des Filzbandes 1 vorgesehen. Dabei ist der Walze 33 ein Druckmessgerät 51 zugeordnet, durch welches der vom Filzband 1 auf die Walze 33 ausgeübte Druck ermittelt wird. Das Ausgangssignal des Druckmessgerätes 51 ist über eine Messleitung 52 an eine Steuereinheit 53 gelegt, durch welche die Spannung des Filzbandes 1 ermittelt wird. Der Ausgang der Steuereinheit 53 ist über eine Steuerleitung 54 an eine Stelleinrichtung 55 für die Walze 32 gelegt, durch welche die Walze 32 in Bewegungsrichtung des Filzbandes 1 verschiebbar ist. Die Walze 32 ist vom ersten Filzband 1 um 90° umschlungen. Die Umschlingung beträgt zumindest 10° und kann auch 180° betragen. Aufgrund dieser Umschlingung kann durch eine Verstellung der Walze 32 die Spannung des Filzbandes 1 auf einen vorgegebenen Wert geregelt werden.

In der FIG. 1 sind zwei Endstellungen der verschiebbaren Walze 32 dargestellt.

Weiters ist eine Einrichtung 6 zur Ermittlung von Abweichungen des ersten Filzbandes 1 von der richtigen Bewegungsbahn und zur Korrektur der Bewegungsrichtung des Filzbandes 6 vorgesehen, welche einen Sensor 61, welcher einem Rand des Filzbandes 1 zugeordnet ist und eine Steuereinheit 62 aufweist. Durch den Sensor 61 werden Abweichungen der Bewegungsrichtung des Filzbandes 1 von der richtigen Bewegungsrichtung ermittelt. Durch die Steuereinheit 62 erfolgt eine Korrektur der Bewegungsrichtung des Filzbandes 1. Hierfür ist die Walze 33 mit einem in der Bewegungsrichtung des Filzbandes 1 verstellbaren Lager ausgebildet. Durch eine Verstellung dieses Lagers wird die Winkellage der Walze 33 gegenüber dem Filzband 1 verändert, wodurch die Bewegungsrichtung des Filzbandes 1 regelbar ist.

In analoger Weise ist der Walze 33a, über welche das rücklaufende Trum des zweiten Filzbandes 1a geführt ist, eine Einrichtung 5a zur Ermittlung und Regelung der Spannung des Filzbandes 1a zugeordnet. Dabei ist einem der beiden Lager der Walze 33a ein Druckmessgerät 51a zugeordnet, durch welches der vom Filzband 1a auf die Walze 33a ausgeübte Druck ermittelt wird. Das Ausgangssignal des Druckmessgerätes 51a ist über eine Messleitung 52a an eine Steuereinheit 53a gelegt, durch welche die Spannung des Filzbandes 1a ermittelt wird. Der Ausgang der Steuereinheit 53a ist über eine Steuerleitung 54a an eine Stelleinrichtung 55a geführt, durch welche die Walze 32a, welche vom Filzband 1a umschlungen ist, in Bewegungsrichtung des Filzbandes 1a verschiebbar ist, wodurch die Spannung des Filzbandes 1a regelbar ist.

Weiters ist eine Einrichtung 6a zur Ermittlung von Abweichungen des zweiten Filzbandes 1a von der richtigen Bewegungsbahn und zur Korrektur der Bewegungsrichtung des Filzbandes 1a vorgesehen, welche einen Sensor 61a, welcher einem Rand des Filzbandes 1a zugeordnet ist und eine Steuereinheit 62a aufweist. Durch den Sensor 61a werden Abweichungen der Bewegungsrichtung des Filzbandes 1a von der richtigen Bewegungsrichtung ermittelt. Durch die Steuereinheit 62a erfolgt eine Korrektur der Bewegungsrichtung des Filzbandes 1a. Hierfür ist die Walze 33a mit einem in der Bewegungsrichtung des Filzbandes 1a verstellbaren Lager ausgebildet. Durch eine Verstellung dieses Lagers wird die Winkellage dieser Walze 33a gegenüber dem Filzband 1a verändert, wodurch die Bewegungsrichtung des Filzbandes 1a regelbar ist.

Anhand der FIG.1 sind die Wirkungsweisen der Einrichtungen zur Ermittlung der Spannung der beiden Filzbänder 1 bzw. 1a, zur Regelung der Spannung der Filzbänder 1 bzw. 1a, zur Ermittlung von Abweichungen der Bewegungsrichtung der Filzbänder 1 bzw. 1a von der richtigen Bewegungsrichtung und zur Korrektur der Bewegungsrichtungen der beiden Filzbänder 1 bzw. 1a erläutert.

Es wird hierzu bemerkt, dass die Filzbänder 1 und 1a die Förderbänder für die Papierbahn 4 darstellen.

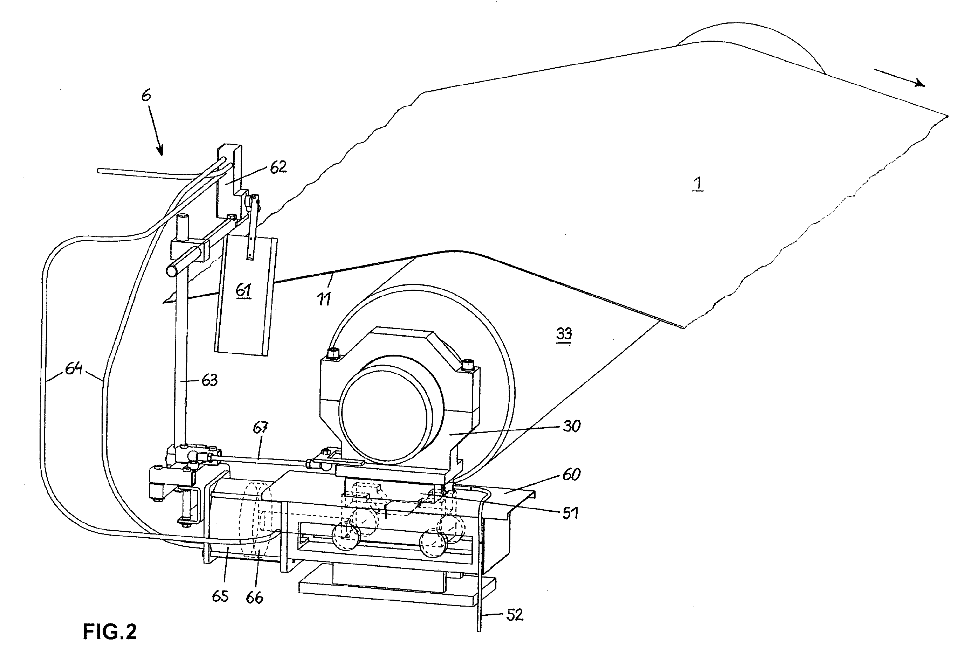

Nachstehend ist anhand der FIG.2 eine erfindungsgemäße Ausführungsform dieser Einrichtungen erläutert.

In FIG.2 ist die Walze 33, über welche das Filzband 1 geführt ist und von welcher eines der Lager mit dem Druckmessgerät 51 ausgebildet ist, dargestellt. Mittels der dieser Walze 33 zugeordneten Einrichtung 5 ist die Spannung des Filzbandes 1 regelbar. Weiters ist das Lager dieser Walze 33 in Bewegungsrichtung des Filzbandes 1 verstellbar, wodurch die Bewegungsrichtung des Filzbandes 1 steuerbar ist.

Die Walze 33 ist an einem ihrer beiden Enden auf einem Lagerbock 30 gelagert, welcher sich auf einem Wagen 60 befindet, der in der Bewegungsrichtung des Filzbandes 1 verstellbar ist. Zwischen dem Lagerbock 30 und dem Wagen 60 befindet sich das Druckmessgerät 51, welches vorzugsweise als Auflagerkraftmessgerät ausgebildet ist. Der Ausgang des Druckmessgerätes 51 ist über die Steuerleitung 52 an die Steuereinheit 53 geführt. Durch das Druckmessgerät 51 wird derjenige Druck ermittelt, welcher durch das Filzband 1 auf die Walze 33 ausgeübt wird. Mittels der Steuereinheit 53 wird hieraus die Spannung des Filzbandes 1 errechnet. Durch das Ausgangssignal der Steuereinheit 53, das über die Steuerleitung 54 an die Stelleinrichtung 55 geführt ist, wird die Stelleinrichtung 55 dahingehend gesteuert, dass die Walze 32 in der Bewegungsrichtung des Filzbandes 1 verstellt wird, wodurch die Spannung des Filzbandes 1 geregelt wird.

Die Einrichtung 6 für die Steuerung und Korrektur der Bewegungsrichtung des Filzbandes 1 ist mit dem Sensor 61 ausgebildet, welcher auf einem Traggestell 63 verschwenkbar gelagert ist. Da der Sensor 61 an einen der beiden Seitenrändern 11 des Filzbandes 1 anliegt, wird er durch eine Abweichung des Filzbandes 1 von der richtigen Bewegungsrichtung ausgelenkt. Durch eine Auslenkung des Sensors 61 wird ein in einem hydraulischen oder pneumatischen Steuersystem befindliches Steuerventil 62 betätigt. An das Steuerventil 62 sind Druckleitungen 64 angeschlossen, welche zu einem Stellzylinder 65 mit einem Stellkolben 66 geführt sind. Durch den Stellkolben 66 ist der Wagen 60, auf welchen sich der Lagerbock 30 befindet, verstellbar. Durch eine Verstellung des Wagens 60 wird der Lagerbock 30 in der Bewegungsrichtung des Filzbandes 1 verstellt, wodurch die Winkellage der Walze 33 gegenüber der Bewegungsrichtung des Filzbandes 1 geändert wird. Durch diese Änderung der Winkellage der Walze 33 wird die Bewegungsrichtung des Filzbandes 1 gesteuert.

Da der Lagerbock 30 über ein Gestänge 67 mit dem Traggestell 63 gekuppelt ist, erfolgt eine mechanische Rückkoppelung dieser Steuerung zur Lage des Sensors 61.

Die Verstellung des Wagens 60 durch das Ausgangssignal des Sensors 61 kann auch elektrisch gesteuert werden.

Anstelle des Stellzylinders 65 mit Stellkolben 66 kann auch eine andere Stelleinrichtung für den Wagen 60 vorgesehen sein.

Die dem zweiten Filzband 1a zugeordneten Einrichtungen zur Ermittlung und zur Regelung der Spannung des Filzbandes 1a sowie zur Ermittlung und Regelung der Bewegungsrichtung des Filzbandes 1a sind in der gleichen Weise wie die dem Filzband 1 zugeordneten Einrichtungen ausgebildet.

Maßgeblich für diese konstruktive Gestaltung ist, dass die Einrichtungen zur Ermittlung der Spannung der Filzbänder 1 bzw. 1a und zur Regelung der Bewegungsrichtungen der Filzbänder 1 bzw. 1a nur einem der beiden Lager einer Walze, über welche die Filzbänder 1 und 1a geführt sind, zugeordnet sind, wodurch Vereinfachungen in der Errichtung, dem Umbau, dem Betrieb und der Wartung der Anlage erzielt werden.

Die gegenständliche Erfindung ist vorstehend anhand einer Anlage zur Erzeugung von Papier erläutert worden, bei welcher die Filzbänder die Förderbänder für das in der Anlage erzeugte Papierband darstellen. Die Erfindung ist jedoch auch bei anderen Anlagen, welche mindestens ein bewegbares und in sich geschlossenes Förderband für den Transport bzw. für die Bearbeitung von Materialien bzw. Gütern aufweisen, anwendbar, da auch bei derartigen Anlagen Regelungen der Spannungen der Förderbänder und zur Überwachung und Korrektur der Bewegungsrichtungen der Förderbänder erforderlich sind.

## Patentansprüche

1. Anlage zur Förderung von Materialien, Produkten u.dgl. mit mindestens einem über Walzen (22, 3, 31, 32, 33, 34; 21a, 3a, 22a, 31a, 32a, 33a) geführten, in sich geschlossenen Förderband (1; 1a), mit einem vorlaufenden Bandtrum zur Förderung der Materialien bzw. Produkte und einem rücklaufenden Bandtrum, insbesondere Anlage zur Erzeugung von Papier mit mindestens einem Siebband bzw. einem Filzband zur Herstellung einer Papierbahn (4), weiters mit einer Einrichtung (5; 5a) zur Ermittlung und Regelung der Spannung des Förderbandes (1; 1a) und mit einer Einrichtung (6; 6a) zur Ermittlung von Abweichungen der Bewegungsrichtung des Förderbandes (1; 1a) von der richtigen Bewegungsrichtung sowie zur Korrektur der Bewegungsrichtung des Förderbandes (1; 1a), wobei die Einrichtung (5; 5a) zur Ermittlung der Spannung des Förderbandes (1; 1a) ein bei einer Walze (33; 33a) angeordnetes Druckmessgerät (51; 51a) aufweist und weiters die Einrichtung (6, 6a) zur Ermittlung von Abweichungen der Bewegungsrichtung des mindestens einen Förderbandes (1; 1a) von der richtigen Bewegungsrichtung und zu deren Korrektur einen einem seitlichen Rand (11) des Förderbandes (1; 1a) zugeordneten Sensor (61; 61a) aufweist, dessen Ausgang zur Verstellung eines der Lager (30) einer Walze (33, 33a) zur Korrektur der Bewegungsrichtung des mindestens einen Förderbandes (1; 1a) dient, **dadurch gekennzeichnet, dass** sich das Druckmessgerät (5; 5a) zur Ermittlung der Spannung des Förderbandes (1; 1a) bei demjenigen Lager einer der Walzen (33; 33a) befindet, welches zur Korrektur der Bewegungsrichtung des mindestens einen Förderbandes (1; 1a) verstellbar ist (FIG. 1).

2. Anlage nach Patentanspruch 1, **dadurch gekennzeichnet, dass** sich das Lager (30) derjenigen Walze (33), bei welcher das Druckmessgerät (51) angeordnet ist, auf einem Wagen (60) befindet, welcher in Bewegungsrichtung des Förderbandes (1) verstellbar ist, wobei das Druckmessgerät (51) zwischen dem Lager (30) und dem Wagen (60) angeordnet ist (FIG.2).

3. Anlage nach einem der Patentansprüche 1 und 2, **dadurch gekennzeichnet, dass** die Einrichtung (5; 5a) zur Ermittlung und Regelung der Spannung des mindestens einen Förderbandes (1; 1a) ein Druckmessgerät (51, 51a) aufweist, dessen Ausgang an eine Steuereinheit (53, 53a) geführt ist, durch welche die Spannung des Förderbandes (1; 1a) ermittelt wird, wobei der Ausgang der Steuereinheit (53, 53a) zur Verstellung einer weiteren Walze (32; 32a) in Bewegungsrichtung des Förderbandes (1; 1a) dient (FIG.2).

4. Anlage nach einem der Patentansprüche 1 bis 3, **dadurch gekennzeichnet, dass** die Einrichtung (5; 5a) zur Ermittlung und Regelung der Spannung des Förderbandes (1; 1a) eine Walze (32; 32a) aufweist, welche vom Förderband (1; 1a) um zumindest 10° umschlungen ist und welche in Bewegungsrichtung des Förderbandes (1; 1a) verstellbar ist (FIG.2).

5. Anlage nach einem der Patentansprüche 2 bis 4, **dadurch gekennzeichnet, dass** der Wagen (60), auf welchem sich eines der Lager der Walze (33, 33a) befindet, mittels einer hydraulisch bzw. pneumatisch betätigbaren Stelleinrichtung (65, 66), welche von der Einrichtung (6) zur Ermittlung von Abweichungen der Bewegungsrichtung von der richtigen Bewegungsrichtung des Förderbandes (1; 1a) gesteuert wird, verstellbar ist (FIG.2).

6. Anlage nach einem der Patentansprüche 1 bis 5, **dadurch gekennzeichnet, dass** dasjenige Lager (30) für eine Walze (33), welches zur Korrektur der Bewegungsrichtung des mindestens einen Förderbandes (1) insbesondere in dessen Bewegungsrichtung verstellbar ist, mit dem Sensor (61) zur Erfassung von Abweichungen der Bewegungsrichtung des mindestens einen Förderbandes (1) von der richtigen Bewegungsrichtung des Förderbandes (1) mechanisch rückgekoppelt ist (FIG.2).

7. Anlage nach einem der Patentansprüche 1 bis 6, **dadurch gekennzeichnet, dass** diejenige Walze (33; 33a), welcher die Einrichtungen (5, 5a; 6, 6a) zur Ermittlung und Regelung der Spannung des Förderbandes (1; 1a) und zur Ermittlung und Korrektur der Bewegungsrichtung des Förderbandes (1; 1a) zugeordnet sind, sich im Bereich des rücklaufenden Trumes des Förderbandes (1; 1a) befindet (FIG.1).

8. Anlage nach einem der Patentansprüche 1 bis 7, **dadurch gekennzeichnet, dass** sie mit zwei in sich geschlossenen Förderbändern (1, 1a) ausgebildet ist, zwischen welchen sich das zu befördernde Material befindet, wobei jedes dieser beiden Förderbänder (1; 1a) über eine Walze (33; 33a) geführt ist, bei welcher einem der Lager eine Einrichtung zur Ermittlung und Regelung der Spannung der Förderbänder (1; 1a) zugeordnet ist und weiters dieses Lager in der Bewegungsrichtung des zugeordneten Förderbandes (1; 1a) verstellbar ist (FIG.1).
